# EUROPEAN PATENT SPECIFICATION

(11) **EP 3 674 768 B1**
(45) Date of publication and mention of the grant of the patent: **20.09.2023**
(21) Application number: 19218896.9
(22) Date of filing: 20.12.2019
(51) Int. Cl.: G02B 7/182, G02B 13/00, G02B 27/00, G03B 11/04, G02B 5/00

(54) **OPTICAL MEMBER DRIVING MECHANISM**
ANTRIEB FÜR OPTISCHES ELEMENT
ACTIONNEUR POUR UN ÉLÉMENT OPTIQUE

(30) Priority: 27.12.2018 US 201862785593 P; 01.02.2019 US 201962799886 P; 06.03.2019 US 201962814543 P; 19.04.2019 US 201962836405 P; 26.07.2019 US 201962879190 P; 16.08.2019 US 201962887905 P; 23.08.2019 US 201962890731 P; 30.08.2019 US 201962894295 P; 06.09.2019 US 201962896943 P
(43) Date of publication of application: 01.07.2020
(60) Divisional application: 23191091.0
(73) Proprietor: TDK TAIWAN CORP., Taoyuan City 326 (TW)
(72) Inventor: WENG, Chih-Wei, Yangmei Taoyuan (TW); HU, Chao-Chang, Yangmei Taoyuan (TW); LEE, Yueh-Lin, Yangmei Taoyuan (TW); FAN, Chen-Hsien, Yangmei Taoyuan (TW); KAO, Chien-Yu, Yangmei Taoyuan (TW); HSU, Chia-Ching, Yangmei Taoyuan (TW); TSAI, Sung-Mao, Yangmei Taoyuan (TW); SONG, Sin-Jhong, Yangmei Taoyuan (TW)
(74) Representative: Hoefer & Partner Patentanwälte mbB

(56) References cited:
- EP-A1- 3 091 377
- CN-U- 207 676 024
- CN-U- 207 851 396
- US-A1- 2018 367 714

## Description

### Technical field

The disclosure relates to an optical member driving mechanism, and in particular to an optical member driving mechanism including a light-shielding structure and/or a light-shielding member.

### Background

With the development of technology, many electronic devices (such as smartphones and digital cameras) nowadays perform the functions of a camera or video recorder. The use of such electronic devices has become increasingly widespread, and these electronic devices have been designed for convenience and miniaturization to provide users with more choices.

Electronic devices with a camera or video function usually have a lens driving module disposed therein to drive a lens to move along an optical axis. Therefore, an autofocus (autofocus; AF) and/or optical image stabilization (optical image stabilization; OIS) function is achieved. Light may pass through the lens and form an image on a photosensitive member. However, during the formation of an optical image, external noise usually enters the photosensitive member due to reflection. As a result, the image quality is usually not good enough to meet the requirement of the image quality for users. Therefore, how to solve the aforementioned problem has become an important topic.

CN207851396U discloses a lens device comprising a first lens module having a first optical axis and including a first lens unit and a first imaging unit disposed along the first optical axis and comprises a second lens module having a second optical axis perpendicular to the first optical axis. The first lens module, an optical path turning unit module, and the second lens module are sequentially arranged in an accommodating space from a first side wall to a second side wall along the first optical axis. CN207676024U discloses a lens module, comprising a fixing member and a carrier, wherein a driving member is driving the carrier to move in a first direction and a second direction with respect to the fixing member. US2018/367714A1 discloses a camera module including a housing, a reflecting module and a lens module disposed behind the reflecting module, wherein a moving holder is disposed to be movable in one axial direction. EP3091377A1 discloses a light shade for an optical system including a light tube extending in a longitudinal direction, the light tube including an optical end defining an optical opening and an exposure end defining an exposure opening. The light shade includes at least one baffle extending radially inward from an inner surface of the light tube.

### Brief summary of the invention

The present disclosure provides an optical member driving mechanism according to claim 1. The optical member driving mechanism includes a movable portion and a fixed portion. The movable portion includes a holder for holding an optical member with an optical axis. The movable portion is movable relative to the fixed portion. The fixed portion has a housing and a base. The housing is disposed on the base, and includes a top surface and a side surface. The top surface extends in a direction that is parallel to the optical axis. The side surface extends from an edge of the top surface in a direction that is not parallel to the optical axis. The side surface has a rectangular opening. The base further includes a barrier that protrudes towards the top surface. When viewed in a direction that is parallel to the optical axis, the barrier and the lengthwise side of the opening at least partially overlap. The barrier has a jagged structure that is disposed to face the top surface.

In an embodiment, a gap is formed between the barrier and the widthwise side of the opening.

In an embodiment, the jagged structure has a plurality of peaks, and when viewed in a direction that is perpendicular to the optical axis, the peaks are exposed from the opening. In an embodiment, when viewed in a direction that is parallel to the optical axis, the peaks overlap with the opening.

In an embodiment, a groove is formed between the barrier and the housing, and the groove is disposed to face the top surface. The optical member driving mechanism further includes a light-shielding member that is disposed out of the housing, wherein when viewed in a direction that is parallel to the optical axis, the light-shielding member overlaps with the lengthwise side of the opening.

In an embodiment, the movable portion further includes a light-shielding sheet disposed between the carrier and the top surface. The light-shielding sheet extends towards the side surface in a direction that is substantially parallel to the optical axis, and when viewed in a direction that is perpendicular to the optical axis, the light-shielding sheet is located on the lengthwise side of the opening.

In an embodiment, the carrier has a protruding portion that extends towards the side surface in a direction that is substantially parallel to the optical axis, and when viewed in a direction that is perpendicular to the optical axis, the protruding portion is located on the lengthwise side of the opening.

In an embodiment, the fixed portion further includes a frame that is disposed between the carrier and the housing, wherein the frame has a light-shielding structure protruding towards the base. In an embodiment, when viewed in a direction that is parallel to the optical axis, the light-shielding structure at least partially overlaps with the lengthwise side of the opening, and a gap is formed between the light-shielding structure and a widthwise side of the opening.

In an embodiment, the light-shielding structure has a jagged structure disposed to face the base. In an embodiment, a groove is formed between the light-shielding structure and the housing, and the groove is disposed to face the top surface. In an embodiment, the optical member driving mechanism further includes a light-shielding member that is disposed in the groove, wherein the shortest distance between the light-shielding member and the base is shorter than the shortest distance between the barrier and the base.

In an embodiment, the light-shielding structure further has a lower surface and a cutting surface that intersects with the lower surface, and a fillet between the lower surface and the cutting surface is not greater than 0.05 mm. In an embodiment, the optical member driving mechanism further includes an electromagnetic driving assembly for driving the movable portion to move relative to the fixed portion, wherein the electromagnetic driving assembly comprises a magnetic member and a coil. Either the magnetic member or the coil is disposed on the movable portion, and the other of the magnetic member or the coil is disposed on the fixed portion.

For making the above or other purposes, features and advantages of the present disclosure more clear, some preferred embodiments are listed in the following paragraphs, and subsequent detailed description is provided as follows in accompany with the accompanying drawings.

### Brief description of the drawings

FIG. 1 is a perspective view illustrating an optical member driving mechanism in accordance with an embodiment of the present disclosure.
FIG. 2 is an exploded view illustrating the optical member driving mechanism shown in FIG. 1.
FIG. 3 is a cross-sectional view illustrating along line 3-B-3-B shown in FIG. 1.
FIG. 4 is an enlarged perspective view illustrating the optical member driving mechanism shown in FIG. 1.
FIG. 5 is an enlarged perspective view illustrating the optical member driving mechanism in accordance with another embodiment of the present disclosure.
FIG. 6 is an enlarged perspective view illustrating the optical member driving mechanism in accordance with another embodiment of the present disclosure.
FIG. 7 is an enlarged perspective view illustrating the optical member driving mechanism in accordance with another embodiment of the present disclosure.
FIG. 8 is a cross-sectional view illustrating the optical member driving mechanism in accordance with another embodiment of the present disclosure.
FIG. 9 is an enlarged perspective view illustrating the optical member driving mechanism in accordance with another embodiment of the present disclosure.
FIG. 10 is an enlarged perspective view illustrating the optical member driving mechanism in accordance with another embodiment of the present disclosure.
FIG. 11 is a perspective view illustrating an optical member driving mechanism in accordance with an embodiment of the present disclosure.
FIG. 12 is an exploded view illustrating the optical member driving mechanism shown in FIG. 11.
FIG. 13 is a cross-sectional view illustrating along line 12-B shown in FIG. 11.
FIG. 14 is an enlarged perspective view illustrating the optical member driving mechanism shown in FIG. 11.
FIG. 15 is an enlarged perspective view illustrating the optical member driving mechanism in accordance with another embodiment of the present disclosure.
FIG. 16 is an enlarged perspective view illustrating the optical member driving mechanism in accordance with another embodiment of the present disclosure.
FIG. 17 is an enlarged perspective view illustrating the optical member driving mechanism in accordance with another embodiment of the present disclosure.
FIG. 18 is a schematic view illustrating a matrix structure in accordance with an embodiment of the present disclosure.
FIG. 19 is a perspective view illustrating the matrix structure in accordance with an embodiment of the present disclosure.

### Detailed Description

The optical member driving mechanisms of some embodiments of the present disclosure are described in the following description. However, it should be appreciated that the following detailed description of some embodiments of the disclosure provides various concepts of the present disclosure which may be performed in specific backgrounds that can vary widely. The specific embodiments disclosed are provided merely to clearly describe the usage of the present disclosure by some specific methods without limiting the scope of the present disclosure.

In addition, relative terms such as "lower" or "bottom," "upper" or "top" may be used in the following embodiments in order to describe the relationship between one element and another element in the figures. It should be appreciated that if the device shown in the figures is flipped upside-down, the element located on the "lower" side may become the element located on the "upper" side.

It should be understood that although the terms "first," "second," "third," etc. may be used herein to describe various elements, materials and/or portions, these elements, materials and/or portions are not limited by the above terms. These terms merely serve to distinguish different elements, materials and/or portions. Therefore, a first element, material and/or portion may be referred to as a second element, material and/or portion without departing from the teaching of some embodiments in the present disclosure.

Unless defined otherwise, all terms (including technical and scientific terms) used herein have the same meaning as commonly understood by one of ordinary skill in the art to which this disclosure belongs. It should be appreciated that, in each case, the term, which is defined in a commonly used dictionary, should be interpreted as having a meaning that conforms to the relative skills of the present disclosure and the background or the context of the present disclosure, and should not be interpreted in an idealized or overly formal manner unless so defined in the present disclosure. In addition, the terms "substantially," "approximately" or "about" may also be recited in the present disclosure, and these terms are intended to encompass situations or ranges that is substantially or exactly the same as the description herein. It should be noted that unless defined specifically, even if the above terms are not recited in the description, it should be read as the same meaning as those approximate terms are recited.

### First group of embodiments

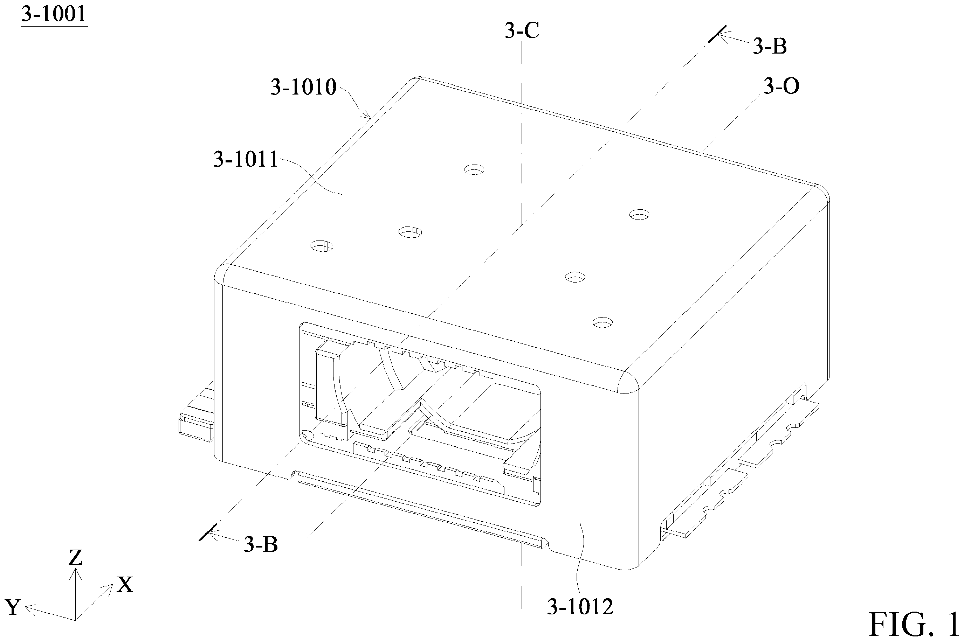

FIG. 1 is a schematic perspective view illustrating an optical member driving mechanism 3-1001 in accordance with an embodiment of the present disclosure. It should be noted that, in this embodiment, the optical member driving mechanism 3-1001 may be, for example, disposed in the electronic devices with camera function for driving an optical member (not shown), and can perform an autofocus (AF) and/or optical image stabilization (OIS) function.

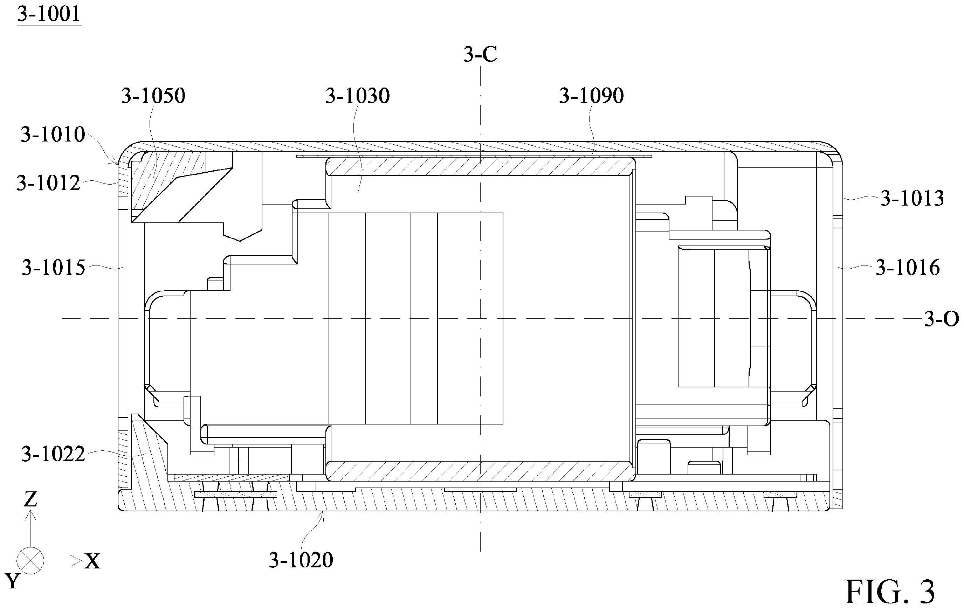

As shown in FIG. 1, the optical member driving mechanism 3-1001 has a central axis 3-C that is substantially parallel to the Z axis. The optical member has an optical axis 3-O that is substantially parallel to the X axis. In other words, in the present embodiment, the central axis 3-C is substantially perpendicular to the optical axis 3-O. The optical member driving mechanism 3-1001 includes a housing 3-1010 which has a top surface 3-1011, a first side surface 3-1012 and a second side surface 3-1013 (as shown in FIG. 3) that is opposite to the first side surface 3-1012. The top surface 3-1011 extends in a direction that is parallel to the optical axis 3-O (i.e. the X-Y plane). The first side surface 3-1012 and the second side surface 3-1013 extend from edges of the top surface 3-1011 in a direction (the Z axis) that is perpendicular to the optical axis 3-O. In other words, in the present embodiment, the first side surface 3-1012 and the second side surface 3-1013 are substantially parallel to each other. In some embodiments, the first side surface 3-1012 and the second side surface 3-1013 extend from the edges of the top surface 3-1011 in a direction that is not parallel to the optical axis 3-O. In addition, the housing 3-1010 has a rectangular first opening 3-1015 that is located on the first side surface 3-1012, and the optical axis 3-O may pass through the first opening 3-1015. The light may pass through the optical member which is disposed in the optical member driving mechanism 3-1001. After the light passes through the optical member, it will travel to an image sensor (not shown) that is disposed out of the optical member driving mechanism 3-1001, and thereby an image may be generated on the above electronic devices.

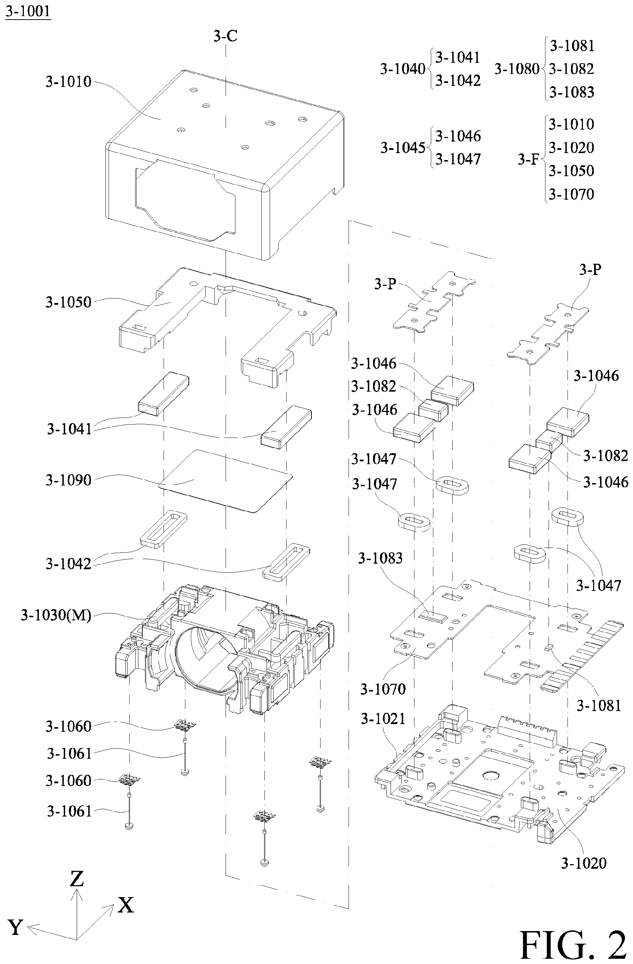

FIG. 2 is an exploded view illustrating the optical member driving mechanism 3-1001 shown in FIG. 1. In the present embodiment, the optical member driving mechanism 3-1001 has a substantial rectangular structure. The optical member driving mechanism 3-1001 mainly includes a fixed portion 3-F, a movable portion 3-M, a plurality of first elastic members 3-1060, a plurality of second elastic members 3-1061, a first electromagnetic driving assembly 3-1040 and a second electromagnetic driving assembly 3-1045. The fixed portion 3-F includes a housing 3-1010, a base 3-1020, a frame 3-1050, and a circuit component 3-1070.

The housing 3-1010 is disposed on the base 3-1020, and protect the elements disposed inside the optical member driving mechanism 3-1001. In some embodiments, the housing 3-1010 is made of metal or another material with sufficient hardness to provide good protection. The frame 3-1050 is disposed in and affixed to the housing 3-1010. The circuit component 3-1070 is disposed on the base 3-1020 for transmitting electric signals, performing the autofocus (AF) and/or optical image stabilization (OIS) function. For example, the optical member driving mechanism 3-1001 may control the position of the optical member based on the aforementioned electric signals so as to form an image. In the present embodiment, a metallic member 3-1021 is disposed in the base by insert molding, and thereby the structural strength of the base 3-1020 may be enhanced.

The movable portion 3-M is movable relative to the fixed portion 3-F. The movable portion 3-M mainly includes a carrier 3-1030 which carries the optical member. As shown in FIG. 2, the carrier 3-1030 is movably connected to the housing 3-1010 and the base 3-1020. The first elastic members 3-1060 are disposed on the carrier 3-1030. The second elastic members 3-1061 extend in a vertical direction (the Z axis), and are connected to the first elastic members 3-1060 and the base 3-1020. As a result, the carrier 3-1030 may be connected to the base 3-1020 via the first elastic members 3-1060 and the second elastic members 3-1061. For example, the first elastic members 3-1060 and the second elastic members 3-1061 are made of metal or another suitable elastic material.

The first electromagnetic driving assembly 3-1040 includes first magnetic members 3-1041 and first coils 3-1042. The first magnetic members 3-1041 may be disposed on the frame 3-1050, and the corresponding first coils 3-1042 are disposed on the carrier 3-1030. When current is applied to the first coils 3-1042, an electromagnetic driving force may be generated by the first coils 3-1042 and the first magnetic members 3-1041 (i.e. the first electromagnetic driving assembly 3-1040) to drive the carrier 3-1030 and the optical member carried therein to move along a horizontal direction (the X-Y plane) relative to the base 3-1020, performing the autofocus (AF) and/or optical image stabilization (OIS) function.

In addition, the second electromagnetic driving assembly 3-1045 includes second magnetic members 3-1046 and second coils 3-1047. The second magnetic members 3-1046 may be disposed on the carrier 3-1030, and the corresponding second coils 3-1047 are disposed on the base 3-1020. For example, the second coils 3-1047 may be flat-plate coils such that the difficulty and the required time for assembly may be reduced. When a current is applied to the second coils 3-1047, an electromagnetic driving force may be generated by the second electromagnetic driving assembly 3-1045 to drive the carrier 3-1030 and the optical member carried therein to move along the optical axis 3-O (the X axis) relative to the base 3-1020, performing the autofocus (AF) function. The carrier 3-1030 may be movably suspended between the frame 3-1050 and the base 3-1020 by the electromagnetic driving force of the first electromagnetic driving assembly 3-1040, the second electromagnetic driving assembly 3-1045 and the force exerted by the first elastic members 3-1060, the second elastic members 3-1061. Furthermore, a magnetic permeable plate 3-P is disposed on the second magnetic members 3-1046 for concentrating the magnetic field of the second magnetic members 3-1046 so that the efficiency of the second electromagnetic driving assembly 3-1045 may be improved. In some embodiments, the magnetic permeable plate 3-P may be made of metal or another material with sufficient magnetic permeability.

The sensing assembly 3-1080 includes a sensor 3-1081, a reference member 3-1082 and an integrated circuit (IC) component 3-1083. In the present embodiment, the sensor 3-1081 and the integrated circuit component 3-1083 are disposed on the circuit component 3-1070, and the reference member 3-1082 is disposed in the carrier 3-1030. A plurality of reference members 3-1082 may be disposed. For example, the reference member 3-1082 is a magnetic member, the sensor 3-1081 may detect the change of the magnetic field of the reference member 3-1082, and the position of the carrier 3-1030 (and the optical member) may be determined by the integrated circuit component 3-1083. In addition, the integrated circuit component 3-1083 may also detect the relative movement between the carrier 3-1030 and the fixed portion 3-F. The integrated circuit component 3-1083 and the sensor 3-1081 are configured to detect different moving direction of the carrier 3-1030. In some embodiments, the sensor 3-1081 or the reference member 3-1082 is disposed on the fixed portion 3-F, and the other of the sensor 3-1081 or the reference member 3-1082 is disposed on the movable portion 3-M.

FIG. 3 is a cross-sectional view illustrating along line 3-B-3-B shown in FIG. 1. As shown in FIG. 3, the housing 3-1010 has a second opening 3-1016, and the optical axis 3-O may pass through the second opening 3-1016. In the present embodiment, the optical member driving mechanism 3-1001 has an incident end and an outlet end, wherein the incident end corresponds to the second opening 3-1016, and the outlet end corresponds to the first opening 3-1015. In the present embodiment, the light may enter the optical member from the incident end (i.e. the second opening 3-1016) along the optical axis 3-O, and exit the optical member from the outlet end (i.e. the first opening 3-1015). In the present embodiment, the frame 3-1050 is disposed between the carrier 3-1030 and the housing 3-1010. When viewed in a direction (the X axis) that is parallel to the optical axis 3-O, the frame 3-1050 and the carrier 3-1030 at least partially overlap.

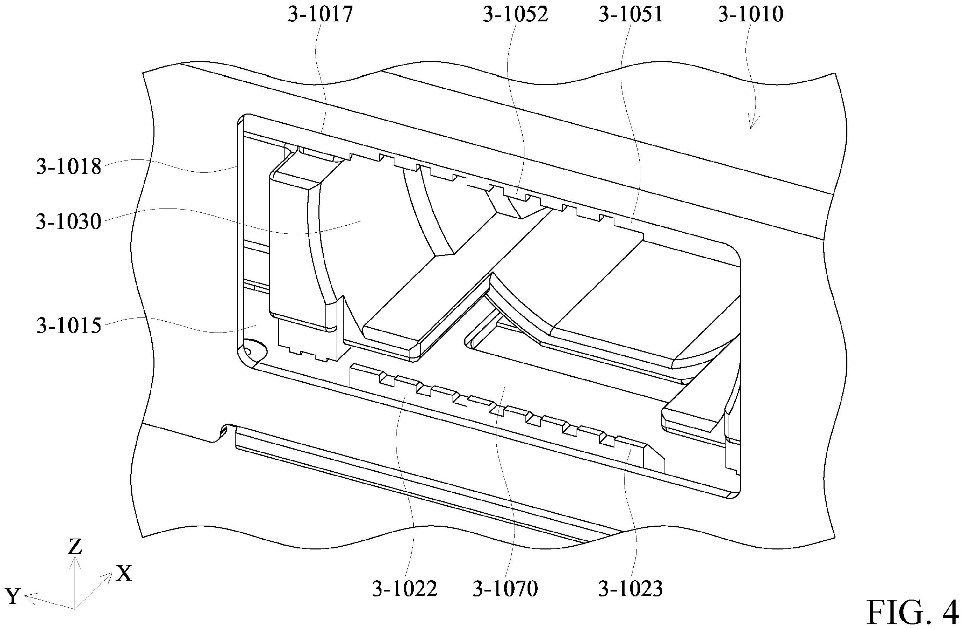

In the present embodiment, the optical member driving mechanism 3-1001 has a light-shielding sheet 3-1090 that is disposed between the carrier 3-1030 and the top surface 3-1011. The light-shielding sheet 3-1090 extends towards the first side surface 3-1012 in a direction that is substantially parallel to the optical axis 3-O. When viewed in a direction (the X axis) that is parallel to the optical axis 3-O, the light-shielding sheet 3-1090 is located on a lengthwise side 3-1017 (as shown in FIG. 4) of the first opening 3-1015. That is, the light-shielding sheet 3-1090 may be located between the optical axis 3-O and the top surface 3-1011. In some embodiments, the carrier 3-1030 may have a protruding portion (not shown) that extends towards the first side surface 3-1012 in a direction that is substantially parallel to the optical axis 3-O. Similarly, when viewed in the direction (the X axis) that is parallel to the optical axis 3-O, the protruding portion is located on the lengthwise side 3-1017 of the first opening 3-1015 and between the optical axis 3-O and the top surface 3-1011.

FIG. 4 is an enlarged perspective view illustrating the optical member driving mechanism 3-1001 shown in FIG. 1 when viewed in the outlet end. As shown in FIG. 4, the base 3-1020 further has a barrier 3-1022 that is disposed to protrude towards the top surface 3-1011. When viewed in a direction (the X axis) that is parallel to the optical axis 3-O, the barrier 3-1022 and the lengthwise side 3-1017 of the first opening 3-1015 at least partially overlap, and a gap is formed between the barrier 3-1022 and a widthwise side 3-1018 of the first opening 3-1015. In other words, when viewed in the same direction as above, the barrier 3-1022 and the widthwise side 3-1018 of the first opening 3-1015 do not overlap. In addition, the frame 3-1050 has a light-shielding structure 3-1051 that is disposed to protrude towards the base 3-1020. When viewed in the direction (the X axis) that is parallel to the optical axis 3-O, the light-shielding structure 3-1051 and the lengthwise side 3-1017 of the first opening 3-1015 also at least partially overlap. Similarly, a gap is formed between the light-shielding structure 3-1051 and the widthwise side 3-1018 of the first opening 3-1015. In other words, when viewed in the same direction as above, the light-shielding structure 3-1051 and the widthwise side 3-1018 of the first opening 3-1015 do not overlap.

In some embodiments, jagged structures 3-1023, 3-1052 may be formed on the barrier 3-1022 and/or the light-shielding structure 3-1051 by a laser engraving process. In some other embodiments, any other regular or irregular structure may be formed on the barrier 3-1022 and/or the light-shielding structure 3-1051 so as to reduce the possibility that the noise reflected in the optical member driving mechanism 3-1001 enters the image sensor, enhancing the image quality. It should be noted that although the barrier 3-1022 and the light-shielding structure 3-1051 are both disposed in the present embodiment, it merely serves as an example. Those skilled in the art may determine whether the barrier 3-1022 and/or the light-shielding structure 3-1051are disposed, or adjust the position of the barrier 3-1022 and/or the light-shielding structure 3-1051 as required.

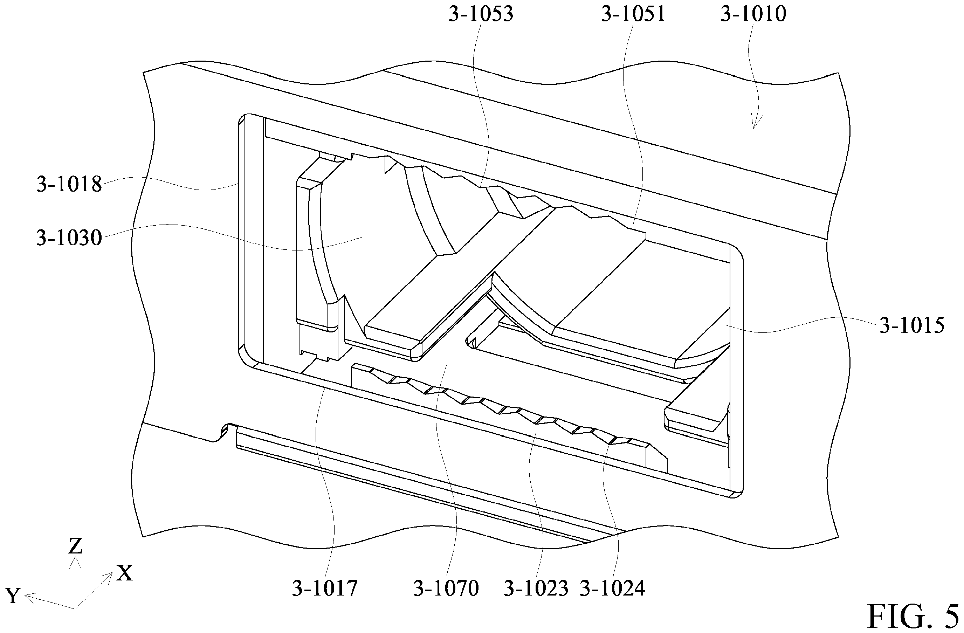

FIG. 5 is an enlarged perspective view illustrating the optical member driving mechanism in accordance with another embodiment of the present disclosure. In the present embodiment, the jagged structure 3-1023 includes multiple tapered structure, wherein and has a plurality of peaks 3-1024. The jagged structure 3-1052 also has a plurality of peaks 3-1053. As shown in FIG. 5, When viewed in the direction (the X axis) that is parallel to the optical axis 3-O, the peaks 3-1024, 3-1053 may be exposed from the first opening 3-1015. In some embodiments, the distance between the lengthwise side 3-1017 of the first opening 3-1015 and the peaks 3-1024, 3-1053 is equal to or longer than 0.25 mm, and thereby the noise may be effectively blocked, preventing the noise from entering the image sensor.

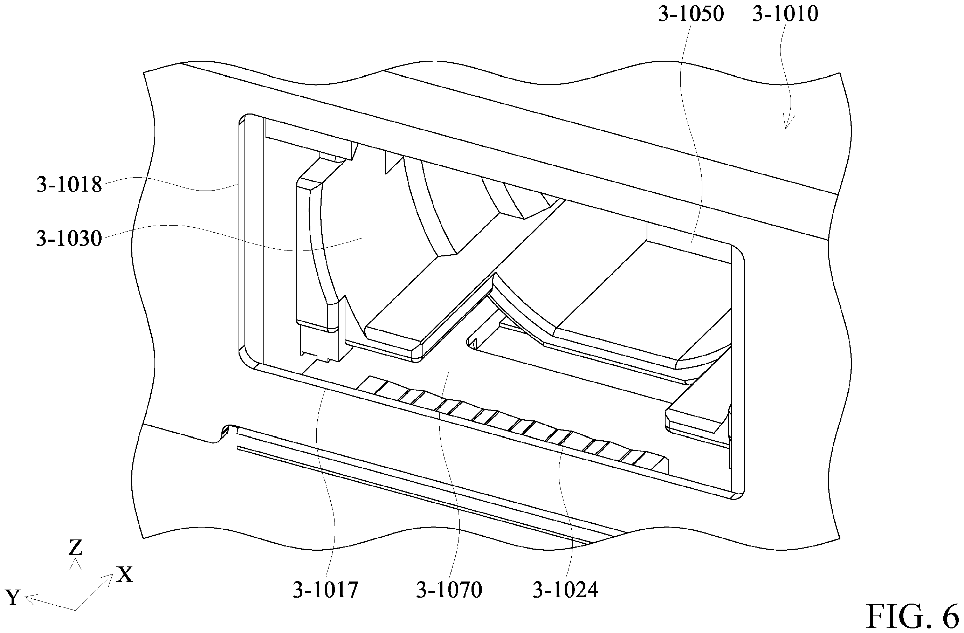

FIG. 6 is an enlarged perspective view illustrating the optical member driving mechanism in accordance with another embodiment of the present disclosure. As shown in FIG. 6, when viewed in the direction (the X axis) that is parallel to the optical axis 3-O, the peaks 3-1024, 3-1053 may not be exposed from the first opening 3-1015. Namely, the peaks 3-1024, 3-1053 may overlap with the housing 3-1010. In some embodiments, the distance between the lengthwise side 3-1017 of the first opening 3-1015 and the peaks 3-1024, 3-1053 is equal to or longer than 0.1 mm, and thereby the noise entering the image sensor may be effectively reduced.

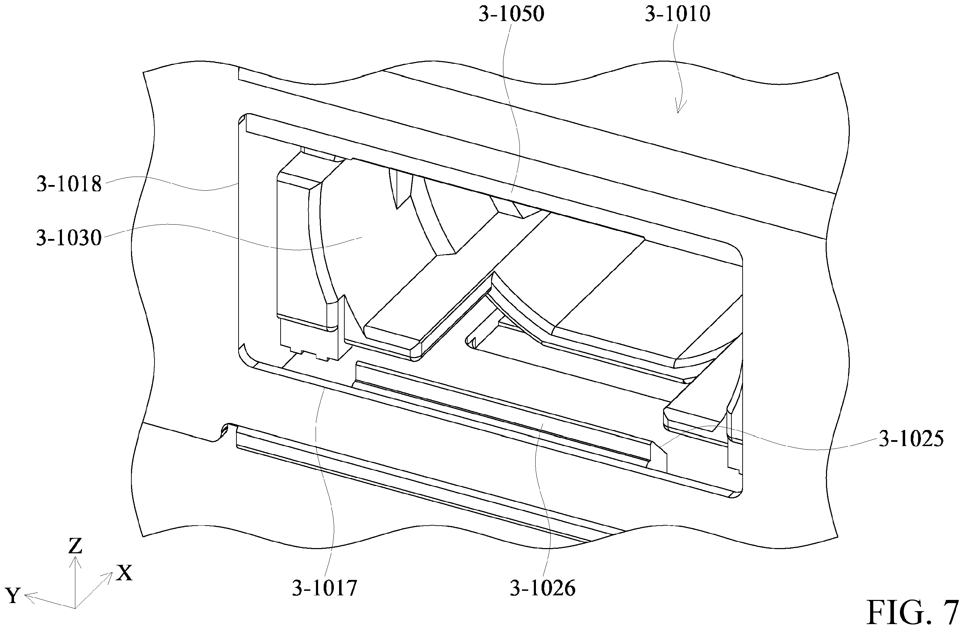

FIG. 7 is an enlarged perspective view illustrating the optical member driving mechanism in accordance with another embodiment of the present disclosure. In the present embodiment, the barrier 3-1022 has an upper surface 3-1025 and a cutting surface 3-1026 that intersects with the upper surface 3-1025. A tapered structure is formed by the upper surface 3-1025 and the cutting surface 3-1026. The upper surface 3-1025 is upwardly inclined, namely facing the carrier 3-1030 and the top surface 3-1011. The cutting surface 3-1026 is substantially perpendicular to the optical axis 3-O, facing the first side surface 3-1012. In some embodiments, a fillet between the upper surface 3-1025 and the cutting surface 3-1026 is not greater than 0.05 mm. Similarly, the light-shielding structure 3-1051 has a lower surface (not shown) and a cutting surface that intersects with the lower surface. In some embodiments, a fillet between the lower surface and the cutting surface is not greater than 0.05 mm.

In addition, a rough surface may be formed on the barrier 3-1022. For example, if a surface roughness of one surface is greater than 16, the surface may be called as a rough surface. The upper surface 3-1025 may be disposed as a rough surface. In some embodiments, the surface, facing the top surface 3-1011, of the base 3-1020 may be formed as a rough surface. Thanks to the arrangement of the rough surfaces, after the light illuminates to the rough surfaces, the intensity of the reflected light may be reduced. Since the possibility and/or the intensity of the light reflected inside the optical member driving mechanism 3-1001 is reduced, the noise may be prevented from entering the image sensor due to reflection, therefore preserving image quality.

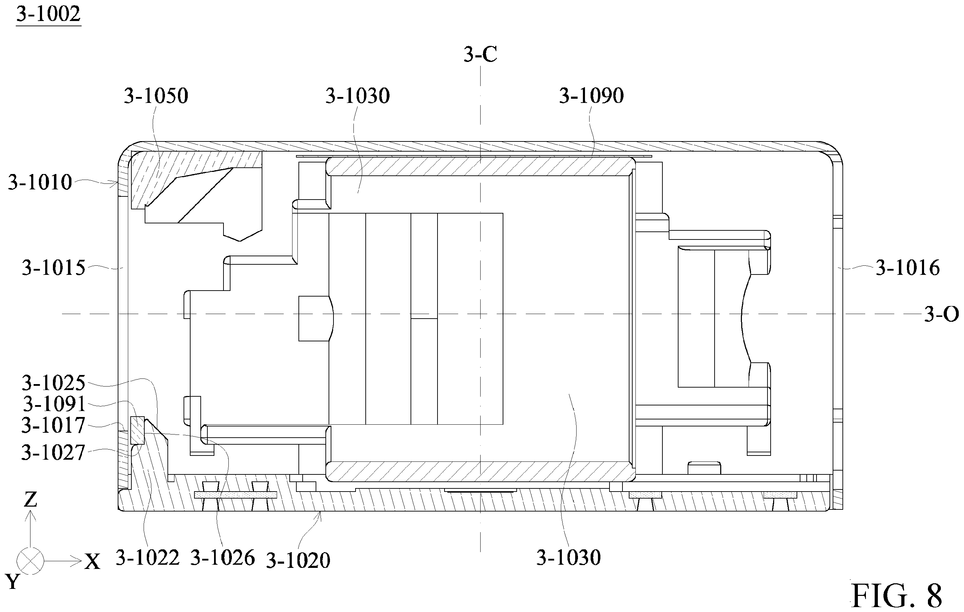

FIG. 8 is a cross-sectional view illustrating the optical member driving mechanism 3-1002 in accordance with another embodiment of the present disclosure. It should be noted that the optical member driving mechanism 3-1002 in the present embodiment may include the same or similar portions as the optical member driving mechanism 3-1001 shown in FIGs. 20-23. Those portions will be labeled as the same numerals, and for the sake of simplicity, the detailed description will not be repeated in the following paragraphs. The difference between the optical member driving mechanism 3-1002 in the present embodiment and the optical member driving mechanism 3-1001 shown in FIGs. 20-23 is that in the optical member driving mechanism 3-1002, a groove 3-1027 is formed between the barrier 3-1022 and the housing 3-1010. The groove 3-1027 is disposed to face the top surface 3-1011, and the light-shielding member 3-1091 is disposed in the groove 3-1027. As shown in FIG. 8, the shortest distance between the light-shielding member 3-1091 and the top surface 3-1011 may be shorter than the shortest distance between the barrier 3-1022 and the top surface 3-1011.

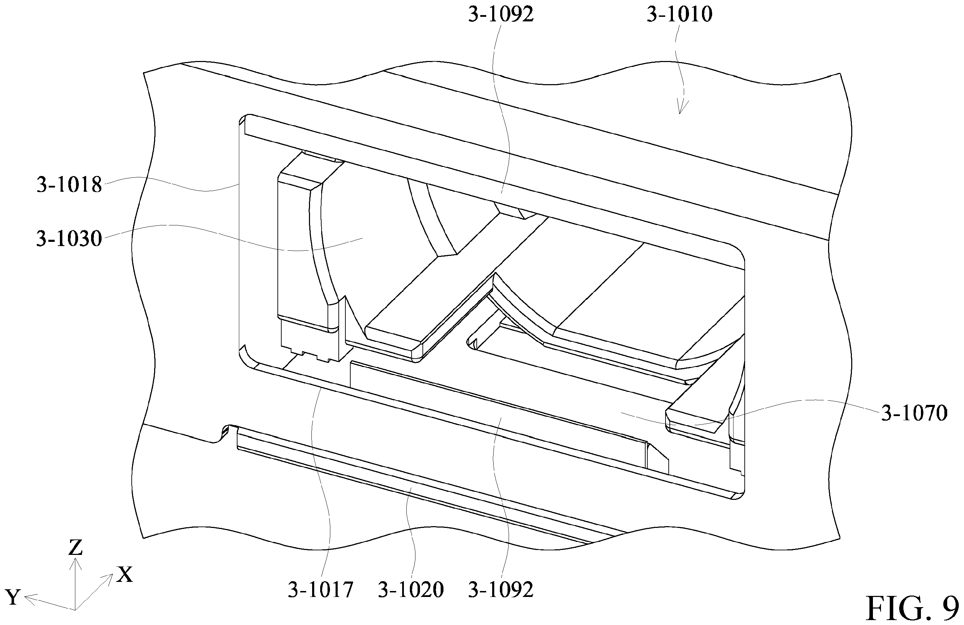

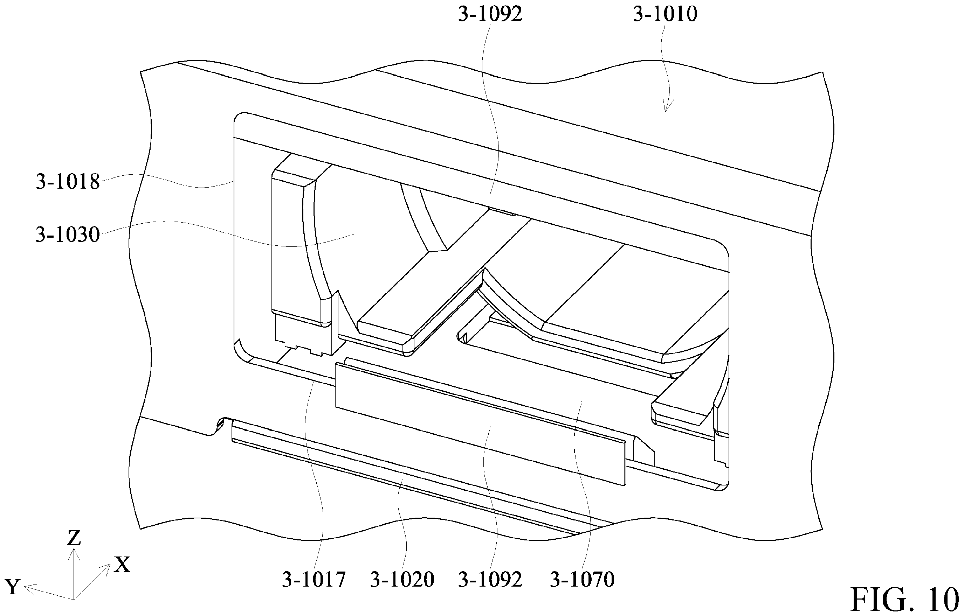

FIGs. 9 and 10 are enlarged perspective views illustrating the optical member driving mechanism in accordance with some other embodiments of the present disclosure. As shown in FIG. 9, the light-shielding member 3-1092 is disposed in the housing 3-1010, located between the housing 3-1010 and the barrier 3-1022, and/or between the housing 3-1010 and the frame 3-1050. For example, a groove that faces the base 3-1020 may be formed between the light-shielding structure 3-1051 and the housing 3-1010, and the light-shielding member 3-1092 is disposed in the above groove. Similarly, the shortest distance between the light-shielding member 3-1092 and the base 3-1020 may be shorter than the shortest distance between the light-shielding structure 3-1051 and the base 3-1020.

In the present embodiment, when viewed in the direction (the X axis) that is parallel to the optical axis 3-O, the light-shielding member 3-1092 and the lengthwise side 3-1017 of the first opening 3-1015 at least partially overlap. As shown in FIG. 10, the light-shielding member 3-1092 is disposed out of the housing 3-1010 and located around the first opening 3-1015. Similarly, when viewed in the direction (the X axis) that is parallel to the optical axis 3-O, the light-shielding member 3-1092 and the lengthwise side 3-1017 of the first opening 3-1015 at least partially overlap.

For example, the light-shielding sheet 3-1090 and the light-shielding member 3-1091, 3-1092 may be formed by resin, fiber or any other suitable material (such as SOMA light-shielding material), and may have a porous structure. In some embodiments, the light-shielding sheet 3-1090 and the light-shielding member 3-1091, 3-1092 may be glass that a surface treatment (such as blackening) is performed to. In some embodiments, the light-shielding sheet 3-1090 and the light-shielding member 3-1091, 3-1092 may reduce the reflectivity of the light with a wavelength in a range from 250 nm to 2500 nm lower than 1.6 %. In some embodiments, the thickness of the light-shielding sheet 3-1090 and the light-shielding member 3-1091, 3-1092 may be in a range from about 0.1 mm to about 0.5 mm. Thanks to the arrangement of the light-shielding sheet 3-1090 and the light-shielding member 3-1091, 3-1092, the noise reflection may be effectively reduced, preventing the noise from entering the image sensor.

As set forth above, the embodiments of the present disclosure provide an optical member driving mechanism including a light-shielding structure and/or a light-shielding member. The embodiments of the present disclosure provide various structures configured to avoid refection, such as barriers, light-shielding sheet, etc. Therefore, the noise may be prevented from entering the image sensor due to reflection, preserving image quality.

### Second group of embodiments

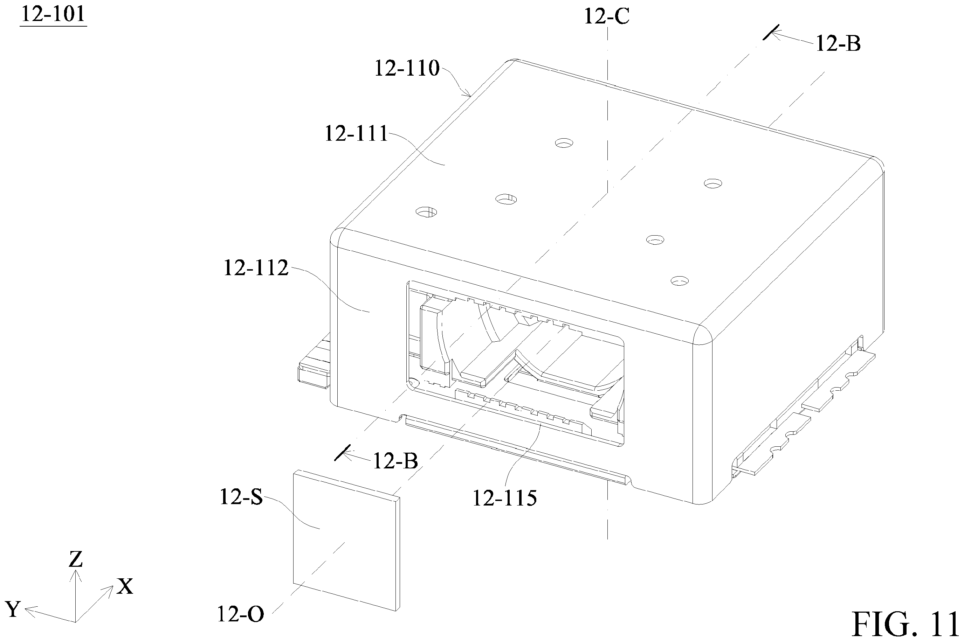

FIG. 11 is a schematic perspective view illustrating an optical member driving mechanism 12-101 in accordance with an embodiment of the present disclosure. It should be noted that, in this embodiment, the optical member driving mechanism 12-101 may be, for example, disposed in the electronic devices with camera function for driving an optical member (not shown), and can perform an autofocus (AF) and/or optical image stabilization (OIS) function.

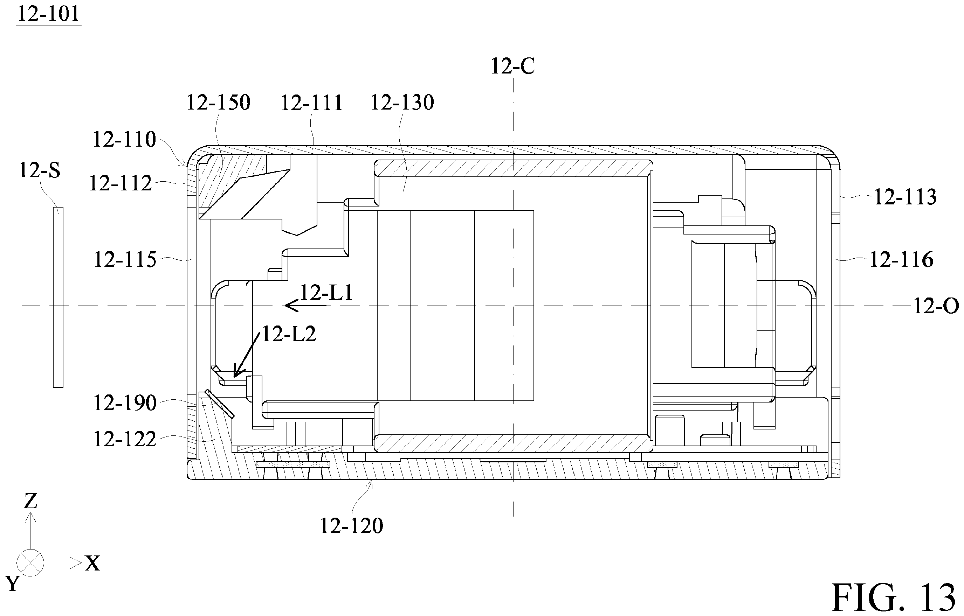

As shown in FIG. 11, the optical member driving mechanism 12-101 has a central axis 12-C that is substantially parallel to the Z axis. The optical member has an optical axis 12-0 that is substantially parallel to the X axis. In other words, in the present embodiment, the central axis 12-C is substantially perpendicular to the optical axis 12-0. The optical member driving mechanism 12-101 includes a housing 12-110 which has a top surface 12-111, a first side surface 12-112 and a second side surface 12-113 (as shown in FIG. 13) that is opposite to the first side surface 1012. The top surface 12-111 extends in a direction that is parallel to the optical axis 12-O (i.e. the X-Y plane). The first side surface 12-112 and the second side surface 12-113 extend from edges of the top surface 12-111 in a direction (the Z axis) that is perpendicular to the optical axis 12-0. In other words, in the present embodiment, the first side surface 12-112 and the second side surface 12-113 are substantially parallel to each other. In some embodiments, the first side surface 12-112 and the second side surface 12-113 extend from the edges of the top surface 12-111 in a direction that is not parallel to the optical axis 12-0.

In addition, the housing 12-110 has a rectangular first opening 12-115 that is located on the first side surface 12-112, and the optical axis 12-0 may pass through the first opening 12-115. The light may pass through the optical member (not shown) which is disposed in the housing 12-110. After the light passes through the above optical member, it will travel to an optical member 12-S that is disposed outside of the housing 12-110. That is, the optical member 12-S corresponds to the first opening 12-115 of the housing 12-110. For example, the optical member 12-S is an image sensor, and thereby an image may be generated on the above electronic devices. It should be appreciated that any suitable element (not shown) may be connected between the housing 12-110 and the optical member 12-S in order to maintain the stability of the optical member 12-S for generating an image. In the present embodiment, when viewed along the optical axis 12-0 (namely, the direction in which the first optical member and the second optical member are arranged), the optical member 12-S and the optical member which is located inside the housing 12-110 at least partially overlap. In addition, when viewed in a direction (e.g. the central axis 12-C) that is perpendicular to optical axis 12-0, the optical member 12-S and the optical member which is located inside the housing 12-110 do not overlap.

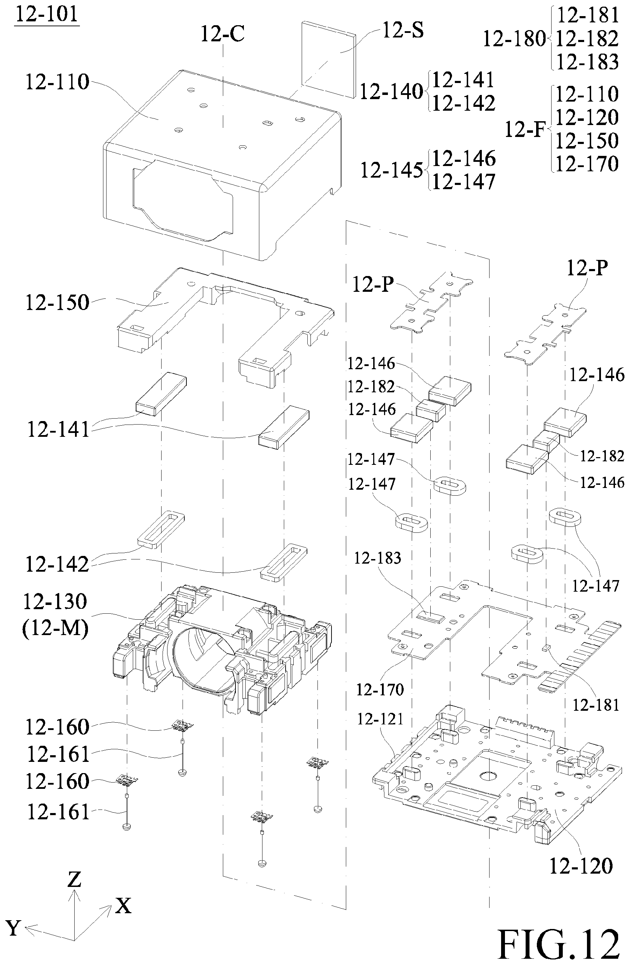

FIG. 12 is an exploded view illustrating the optical member driving mechanism 12-101 shown in FIG. 11. In the present embodiment, the housing 12-110 of the optical member driving mechanism 12-101 has a substantial rectangular structure. The optical member driving mechanism 12-101 mainly includes a fixed portion 12-F (e.g. a first portion), a movable portion 12-M (e.g. a second portion), a plurality of first elastic members 12-160, a plurality of second elastic members 12-161, a first electromagnetic driving assembly 12-140 and a second electromagnetic driving assembly 12-145. The fixed portion 12-F includes a housing 12-110, a base 12-120, a frame 12-150, and a circuit component 12-170.

The housing 12-110 is disposed on the base 12-120, and protect the elements disposed inside the optical member driving mechanism 12-101. In some embodiments, the housing 12-110 is made of metal or another material with sufficient hardness to provide good protection. The frame 12-150 is disposed in and affixed to the housing 12-110. The circuit component 12-170 is disposed on the base 12-120 for transmitting electric signals, performing the autofocus (AF) and/or optical image stabilization (OIS) function. For example, the optical member driving mechanism 12-101 may control the position of the optical member based on the aforementioned electric signals so as to form an image. In the present embodiment, a metallic member 12-121 is disposed in the base by insert molding, and thereby the structural strength of the base 12-120 may be enhanced.

The movable portion 12-M is movable relative to the fixed portion 12-F. The movable portion M mainly includes a carrier 12-130 which carries an optical member. As shown in FIG. 12, the carrier 12-130 is movably connected to the housing 12-110 and the base 12-120. The first elastic members 12-160 are disposed on the carrier 12-130. The second elastic members 12-161 extend in a vertical direction (the Z axis), and are connected to the first elastic members 12-160 and the base 12-120. As a result, the carrier 12-130 may be connected to the base 12-120 via the first elastic members 12-160 and the second elastic members 12-161. For example, the first elastic members 12-160 and the second elastic members 12-161 are made of metal or another suitable elastic material.

The first electromagnetic driving assembly 12-140 includes first magnetic members 12-141 and first coils 12-142. The first magnetic members 12-141 may be disposed on the frame 12-150, and the corresponding first coils 12-142 are disposed on the carrier 12-130. When current is applied to the first coils 12-142, an electromagnetic driving force may be generated by the first coils 12-142 and the first magnetic members 12-141 (i.e. the first electromagnetic driving assembly 12-140) to drive the carrier 12-130 and the optical member carried therein to move along a horizontal direction (the X-Y plane) relative to the base 12-120, performing the autofocus (AF) and/or optical image stabilization (OIS) function.

In addition, the second electromagnetic driving assembly 12-145 includes second magnetic members 12-146 and second coils 12-147. The second magnetic members 12-146 may be disposed on the carrier 12-130, and the corresponding second coils 12-147 are disposed on the base 12-120. For example, the second coils 12-147 may be flat-plate coils such that the difficulty and the required time for assembly may be reduced. When a current is applied to the second coils 12-147, an electromagnetic driving force may be generated by the second electromagnetic driving assembly 12-145 to drive the carrier 12-130 and the optical member carried therein to move along the optical axis O (the X axis) relative to the base 12-120, performing the autofocus (AF) function. The carrier 12-130 may be movably suspended between the frame 12-150 and the base 12-120 by the electromagnetic driving force of the first electromagnetic driving assembly 12-140, the second electromagnetic driving assembly 12-145 and the force exerted by the first elastic members 12-160, the second elastic members 12-161. Furthermore, a magnetic permeable plate 12-P is disposed on the second magnetic members 12-146 for concentrating the magnetic field of the second magnetic members 12-146 so that the efficiency of the second electromagnetic driving assembly 12-145 may be improved. In some embodiments, the magnetic permeable plate 12-P may be made of metal or another material with sufficient magnetic permeability.

The sensing assembly 12-180 includes a sensor 12-181, a reference member 12-182 and an integrated circuit (IC) component 12-183. In the present embodiment, the sensor 12-181 and the integrated circuit component 12-183 are disposed on the base 12-120, and the reference member 12-182 is disposed in the carrier 12-130. A plurality of reference members 12-182 may be disposed. For example, the reference member 12-182 is a magnetic member, the sensor 12-181 may detect the change of the magnetic field of the reference member 12-182, and the position of the carrier 12-130 (and the optical member) may be determined by the integrated circuit component 12-183. In some embodiments, the sensor 12-181 or the reference member 12-182 is disposed on the fixed portion 12-F, and the other of the sensor 12-181 or the reference member 12-182 is disposed on the movable portion 12-M.

FIG. 13 is a cross-sectional view illustrating along line B-B shown in FIG. 11. As shown in FIG. 13, the housing 12-110 has a second opening 12-116, and the optical axis 12-0 may pass through the second opening 12-116. In the present embodiment, the optical member driving mechanism 12-101 has an incident end and an outlet end, wherein the incident end corresponds to the second opening 12-116, and the outlet end corresponds to the first opening 12-115. In the present embodiment, the light may enter the optical member from the incident end (i.e. the second opening 12-116) along the optical axis 12-0, and exit the optical member from the outlet end (i.e. the first opening 12-115). In the present embodiment, the frame 12-150 is disposed between the carrier 12-130 and the housing 12-110. When viewed in a direction (the X axis) that is parallel to the optical axis 12-0, the frame 12-150 and the carrier 12-130 at least partially overlap.

In addition, the base 12-120 further has a barrier 12-122 that is disposed to protrude towards the top surface 12-111. The barrier 12-122 may have a fillet structure, and when viewed along the optical axis 12-0 from the first opening 12-115, the fillet structure is formed on the edge of the first opening 12-115. The optical member driving mechanism 12-101 further includes a matrix structure 12-190 that is disposed on the barrier 12-122 (such as disposed on the fillet structure of the barrier 12-122). The matrix structure 12-190 is disposed between the optical member 12-S and the optical member which is carried by the carrier 12-130. For example, a first light 12-L1 (e.g. the desired light to form an image) entering the optical member driving mechanism 12-101 may travel along the optical axis 12-0, reach the optical member 12-S and form an image after passing through the optical member which is carried by the carrier 12-130. Furthermore, a second light 12-L2 (such as the noise to be removed) may travel along a direction that is not parallel to the optical axis 12-0, and be reflected by the matrix structure 12-190 after passing through the optical member which is carried by the carrier 12-130, remaining inside the housing 12-110. By means of the arrangement of the matrix structure 12-190, the possibility that the second light 12-L2 reaches the optical member 12-S may be effectively reduced, therefore preserving the image quality.

As shown in FIG. 13, the extending direction of the matrix structure 12-190 is not parallel and not perpendicular to the traveling direction (i.e. the optical axis 12-0) of the first light 12-L1. It should be appreciated that those skilled in the art may adjust the extending direction of the matrix structure 12-190 in response to the traveling direction of the second light 12-L2, and it will not be repeated in the following paragraphs. In the present embodiment, when viewed along the optical axis 12-0, the matrix structure 12-190 and the first opening 12-115 at least partially overlap.

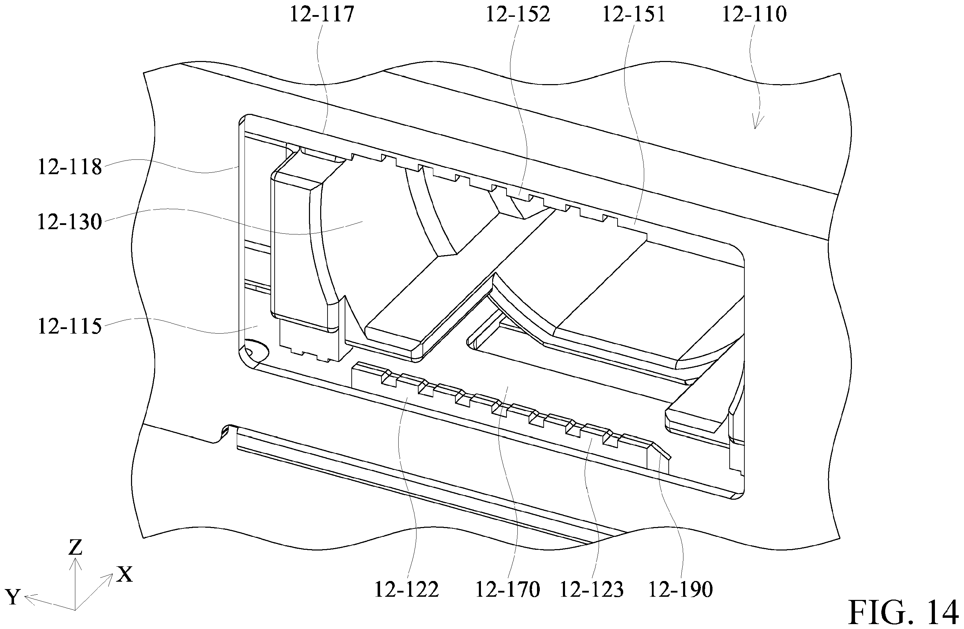

FIG. 14 is an enlarged perspective view illustrating the optical member driving mechanism 12-101 shown in FIG. 11 from the outlet end. As shown in FIG. 14, when viewed in a direction (the X axis) that is parallel to the optical axis 12-0, the barrier 12-122 and a lengthwise side 12-117 of the first opening 12-115 at least partially overlap, and a gap is formed between the barrier 12-122 and a widthwise side 12-118 of the first opening 12-115. In other words, when viewed in the same direction as above, the barrier 12-122 and the widthwise side 12-118 of the first opening 12-115 do not overlap. In addition, the frame 12-150 has a light-shielding structure 12-151 that is disposed to protrude towards the base 12-120. When viewed in the direction (the X axis) that is parallel to the optical axis O, the light-shielding structure 12-151 and the lengthwise side 12-117 of the first opening 12-115 also at least partially overlap. Similarly, a gap is formed between the light-shielding structure 12-151 and the widthwise side 12-118 of the first opening 12-115. In other words, when viewed in the same direction as above, the light-shielding structure 12-151 and the widthwise side 12-118 of the first opening 12-115 do not overlap.

In some embodiments, jagged structures 12-123, 12-152 may be formed on the barrier 12-122 and/or the light-shielding structure 12-151 by a laser engraving process. In some other embodiments, any other regular or irregular structure may be formed on the barrier 12-122 and/or the light-shielding structure 12-151 so as to reduce the possibility that the noise reflected in the optical member driving mechanism 12-101 enters the image sensor, enhancing the image quality. It should be noted that although the barrier 12-122 and the light-shielding structure 12-151 are both disposed in the present embodiment, it merely serves as an example. Those skilled in the art may determine whether the barrier 12-122 and/or the light-shielding structure 12-151 are disposed, or adjust the position of the barrier 12-122 and/or the light-shielding structure 12-151 as required.

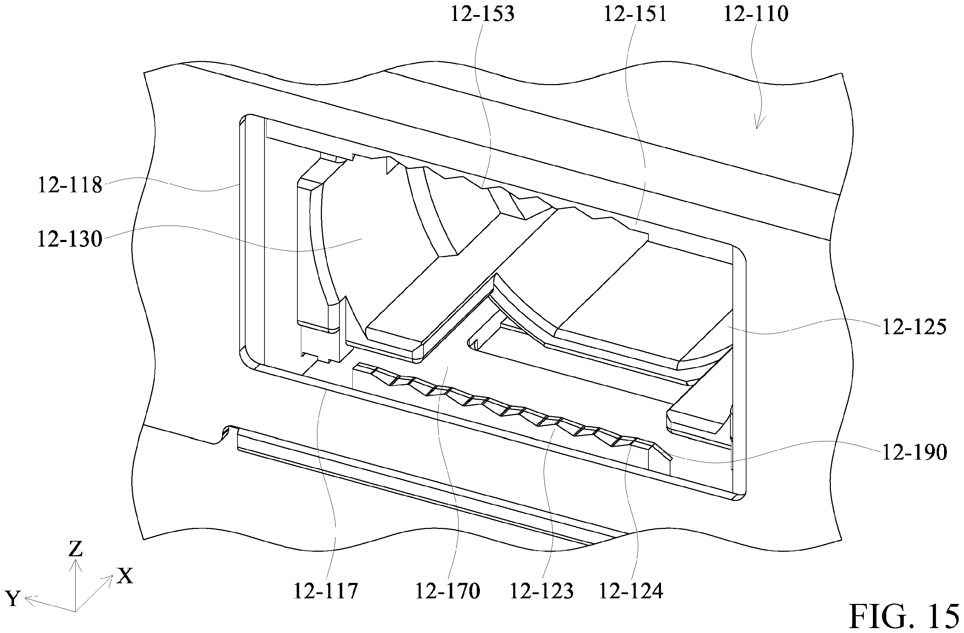

FIG. 15 is an enlarged perspective view illustrating the optical member driving mechanism in accordance with another embodiment of the present disclosure. In the present embodiment, the jagged structure 12-123 includes multiple tapered structure, and has a plurality of peaks 12-124. The jagged structure 12-152 also has a plurality of peaks 12-153. As shown in FIG. 15, When viewed in the direction (the X axis) that is parallel to the optical axis 12-0, the peaks 12-124, 12-153 may be exposed from the first opening 12-115. In some embodiments, the distance between the lengthwise side 12-117 of the first opening 12-115 and the peaks 12-124, 12-153 is equal to or longer than 0.25 mm, and thereby the noise may be effectively blocked, preventing the noise from entering the image sensor. In addition, the matrix structure 12-190 may be disposed on the jagged structure 12-123 and/or the jagged structure 12-152. As a result, the possibility that the noise (e.g. the second light 12-L2 shown in FIG. 13) reaches the optical member 12-S may be further reduced, therefore preserving the image quality.

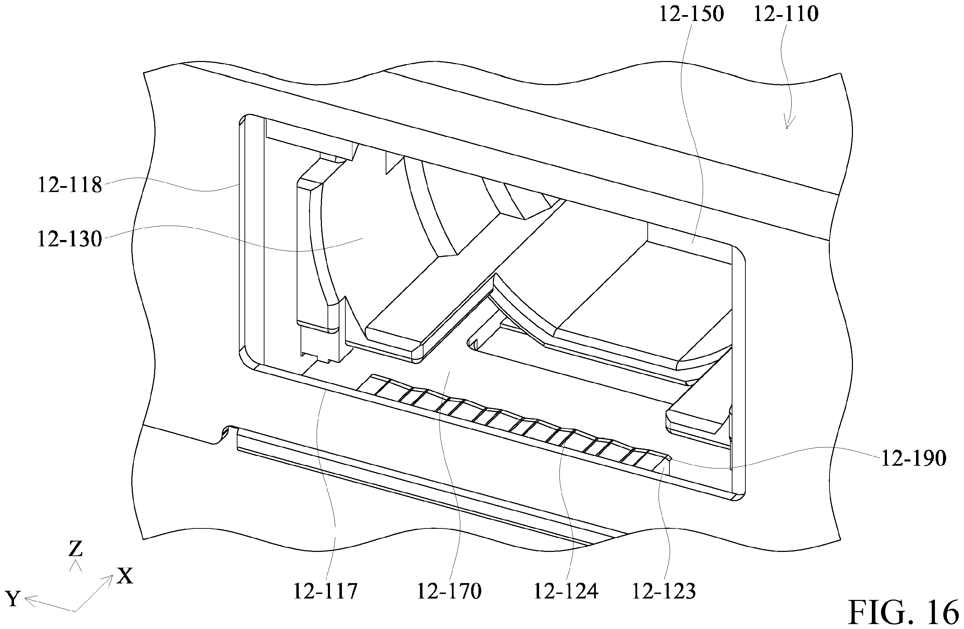

FIG. 16 is an enlarged perspective view illustrating the optical member driving mechanism in accordance with another embodiment of the present disclosure. As shown in FIG. 16, when viewed in the direction (the X axis) that is parallel to the optical axis 12-0, the peaks 12-124, 12-153 may not be exposed from the first opening 12-115. Namely, the peaks 12-124, 12-153 may overlap with the housing 12-110. In some embodiments, the distance between the lengthwise side 12-117 of the first opening 12-115 and the peaks 12-124, 12-153 is equal to or longer than 0.1 mm, and thereby the noise entering the image sensor may be effectively reduced. In addition, the matrix structure 12-190 may be disposed on the jagged structure 12-123 and/or the jagged structure 12-152 (as shown in FIG. 15). As a result, the possibility that the noise reaches the optical member 12-S may be further reduced, therefore preserving the image quality.

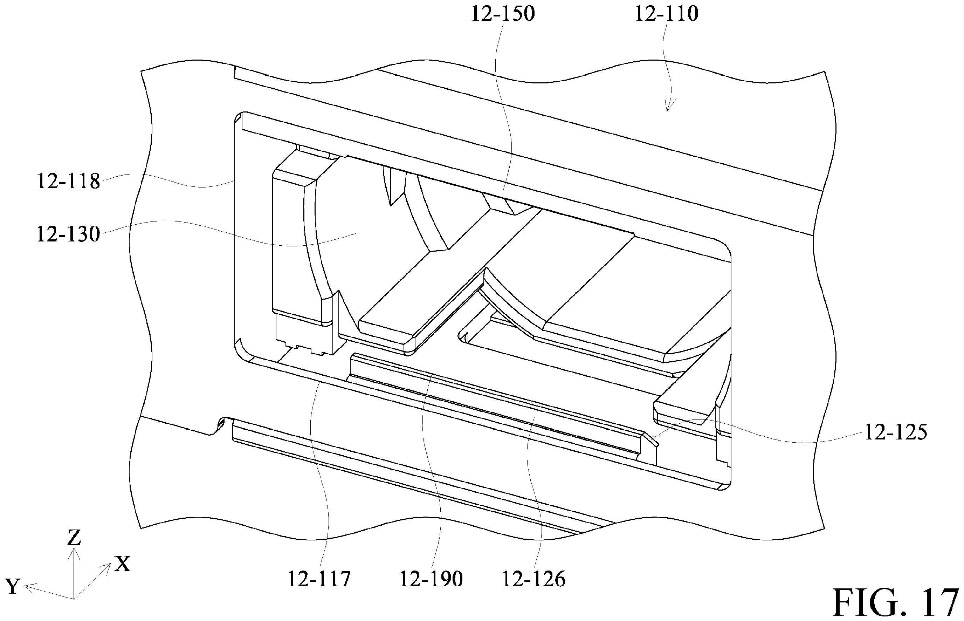

FIG. 17 is an enlarged perspective view illustrating the optical member driving mechanism in accordance with another embodiment of the present disclosure. In the present embodiment, the barrier 12-122 has an upper surface 12-125 and a cutting surface 12-126 that intersects with the upper surface 12-125. A tapered structure is formed by the upper surface 12-125 and the cutting surface 12-126. The upper surface 12-125 is upwardly inclined, namely facing the carrier 12-130 and the top surface 12-111. The cutting surface 12-126 is substantially perpendicular to the optical axis 12-0, facing the first side surface 12-112. In some embodiments, a fillet between the upper surface 12-125 and the cutting surface 12-126 is not greater than 0.05 mm. Similarly, the light-shielding structure 12-151 has a lower surface (not shown) and a cutting surface that intersects with the lower surface. In some embodiments, a fillet between the lower surface and the cutting surface is not greater than 0.05 mm. In addition, the matrix structure 12-190 may be disposed on the upper surface 12-125 of the barrier 12-125 and/or on the lower surface of the light-shielding structure 12-151. As a result, the possibility that the noise reaches the optical member 12-S may be further reduced, therefore preserving the image quality.

It should be understood that multiple embodiments for arranging the matrix structure 12-190 are provided as above, but these embodiments merely serve as examples without limiting the scope of the present disclosure. Those skilled in the art may arrange the matrix structure 12-190 on the fixed portion 12-F (including the housing 12-110, the base 12-120, the frame 12-150 and/or the circuit component 12-170) and/or the movable portion 12-M. In addition, although in the embodiments of the present disclosure, the matrix structure 12-190 is disposed as planar, however in some embodiments the matrix structure 12-190 may be disposed as curved (i.e. having a curvature). In some embodiments, the matrix structure 12-190 may be disposed on an element or portion that is made of metal.

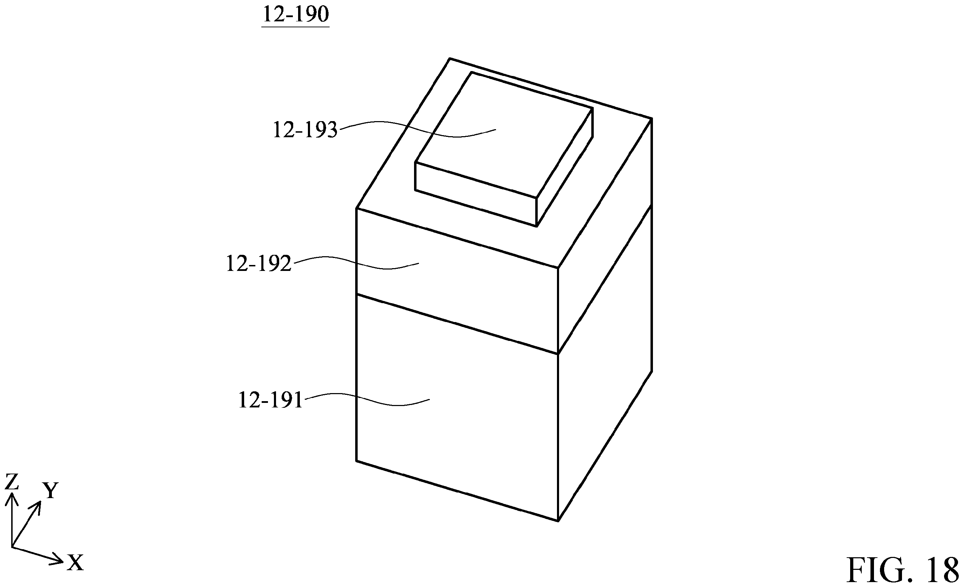

FIG. 18 is a schematic view illustrating the matrix structure 12-190 in accordance with an embodiment of the present disclosure. As shown in FIG. 18, the matrix structure 12-190 is multi-layered and includes a metallic layer 12-191, an insulating layer 12-192 and a protruding portion 12-193. The metallic layer 12-191 is the bottommost layer of the matrix structure 12-190. For example, the material of the metallic layer 12-191 includes gold (Au), silver (Ag), aluminum (Al), any other suitable metallic material or a combination thereof. The insulating layer 12-192 is formed on the metallic layer 12-191. For example, the material of the insulating layer 12-192 includes magnesium fluoride (MgF2), silicon dioxide (SiO2), any other suitable insulating material or a combination thereof. The protruding portion 12-193 is formed on the insulating layer 12-192, wherein the area of the protruding portion 12-193 on the horizontal plane (the X-Y plane) may be smaller than the area of the insulating layer 12-192 on the horizontal plane. That is, when viewed in a vertical direction, the insulating layer 12-192 may be exposed from the protruding portion 12-193. For example, the material of the protruding portion 12-193 includes gold (Au), silver (Ag), aluminum (Al), any other suitable metallic material or a combination thereof. In some embodiments, the metallic layer 12-191 and the protruding portion 12-193 may be formed of the same material. In some other embodiments, the metallic layer 12-191 and the protruding portion 12-193 may be formed of different materials.

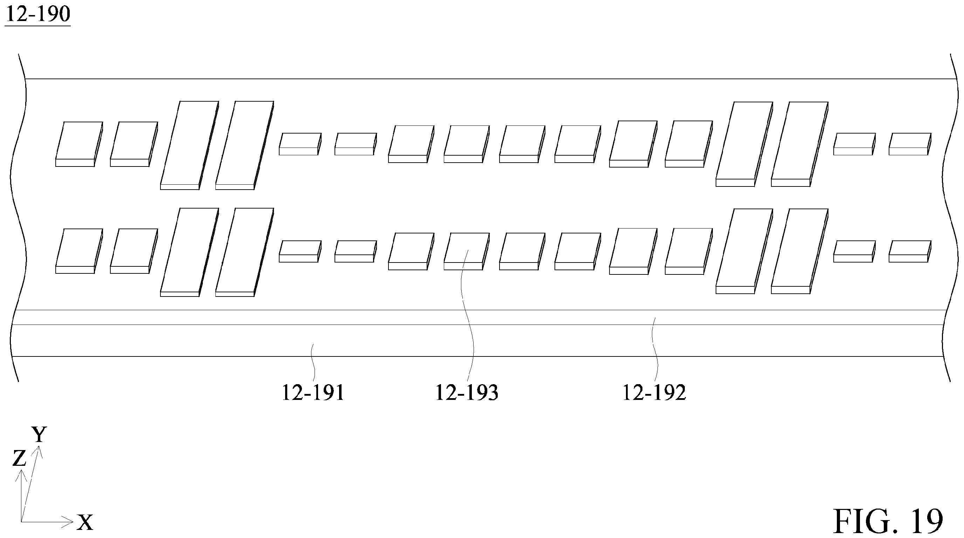

FIG. 19 is a perspective view illustrating the matrix structure 12-190 in accordance with an embodiment of the present disclosure. As shown in FIG. 19, the matrix structure 12-190 has a plurality of protruding portions 12-193 with different sizes. The protruding portions 12-193 are formed on the insulating layer 12-192. By means of arranging the protruding portions 12-193 in a particular manner, the surface plasmon resonance (SPR) generated by the matrix structure 12-190 may be tuned, such that the direction of the light reflected by the matrix structure 12-190 may be controlled. As a result, the possibility that the noise reaches the optical member 12-S may be further reduced, therefore preserving the image quality. It should be understood that the arrangement (such as the sizes or arrangement of each of the protruding portions 12-193) of the matrix structure 12-190 may be adjusted in response to light (e.g. visible light, infrared light, etc.) with certain range of wavelength. Therefore, the function to avoid the noise worsening the image quality may be achieved.

As set forth above, the embodiments of the present disclosure provide an optical member driving mechanism including a matrix structure that corresponds to the noise. By means of the arrangement of the matrix structure, the possibility that the noise reaches the optical member may be further reduced, therefore preserving the image quality. As a result, the optical member driving mechanism may be simplified and miniaturized. In addition, the matrix structure may be disposed with other anti-refection structures (such as barriers), further enhancing the preservation for high-quality image.

The embodiment of the present invention has at least one of the following advantages or effects. Through the adjustment assembly, a plurality of optical modules can be aligned with each other, and one or more optical modules and an image sensor module can be aligned with each other, so as to improve the quality of the device. In addition, since the adjustment assembly can change its shape during adjustment process (usually being squeezed and reduced in height in the vertical direction), the adjustment between the optical module and the image sensor module can be more accurate and greatly improved product quality.

While the embodiments and the advantages of the present disclosure have been described above, it should be understood that those skilled in the art may make various changes, substitutions, and alterations to the present disclosure without departing from the scope of the present invention as defined by appended claims.

## Claims

1. An optical member driving mechanism (3-1001), comprising:
a movable portion (3-M) comprising a carrier (3-1030) for carrying an optical member with an optical axis (3-O); and
a fixed portion (3-F), wherein the movable portion (3-M) is movable relative to the fixed portion (3-F), and the fixed portion (3-F) comprises a housing (3-1010) and a base (3-1020), the housing (3-1010) is disposed on the base (3-1020), wherein the housing (3-1010) is for protecting the movable portion (3-M), and the movable portion (3-M) is disposed inside the housing (3-1010), wherein the housing (3-1010) has:
a top surface (3-1011) extending in a direction that is parallel to the optical axis (3-O); and
a side surface (3-1012) extending in a direction that is not parallel to the optical axis (3-O) from an edge of the top surface (3-1011), wherein the side surface (3-1012) has a rectangular opening (3-1015),
wherein the optical axis (3-0) passes through the opening (3-1015), **characterized in that** the base (3-1020) further comprises a barrier (3-1022) protruding towards the top surface (3-1011), when viewed in a direction that is parallel to the optical axis (3-O), the barrier (3-1022) and the lengthwise side (3-1017) of the opening (3-1015) at least partially overlap,
wherein a gap is formed between the barrier (3-1022) and the widthwise side (3-1018) of the opening (3-1015),
wherein the barrier (3-1022) has a jagged structure (3-1023) disposed to face the top surface (3-1011).

2. The optical member driving mechanism (3-1001) as claimed in claim 1, wherein the jagged structure (3-1023) has a plurality of peaks (3-1024), and when viewed in a direction that is perpendicular to the optical axis (3-O), the peaks (3-1024) are exposed from the opening (3-1015).

3. The optical member driving mechanism (3-1001) as claimed in claim 1, wherein the jagged structure (3-1023) has a plurality of peaks (3-1024), and when viewed in a direction that is parallel to the optical axis (3-O), the peaks (3-1024) overlap with the opening (3-1015).

4. The optical member driving mechanism (3-1001) as claimed in claim 1, wherein a groove (3-1027) is formed between the barrier (3-1022) and the housing (3-1010), and the groove (3-1027) is disposed to face the top surface (3-1011).

5. The optical member driving mechanism (3-1001) as claimed in claim 4, further comprising a light-shielding member (3-1091) disposed in the groove (3-1027), wherein a shortest distance between the light-shielding member (3-1091) and the top surface (3-1011) is shorter than a shortest distance between the barrier (3-1022) and the top surface (3-1011).

6. The optical member driving mechanism (3-1001) as claimed in claim 1, wherein the barrier (3-1022) further has an upper surface (3-1025) and a cutting surface (3-1026) that intersects with the upper surface (3-1025), and a fillet between the upper surface (3-1025) and the cutting surface (3-1026) is not greater than 0.05 mm.

7. The optical member driving mechanism (3-1001) as claimed in claim 1, wherein the barrier (3-1022) has a rough surface disposed to face the top surface (3-1011).

8. The optical member driving mechanism (3-1001) as claimed in claim 1, wherein the base (3-1020) has a rough surface disposed to face the top surface (3-1011).

9. The optical member driving mechanism (3-1001) as claimed in claim 1, further comprising a light-shielding member (3-1091) disposed out of the housing (3-1010), wherein when viewed in a direction that is parallel to the optical axis (3-O), the light-shielding member (3-1091) overlaps with a lengthwise side (3-1017) of the opening (3-1015).

10. The optical member driving mechanism (3-1001) as claimed in claim 1, wherein the movable portion (3-M) further comprises a light-shielding sheet (3-1090) disposed between the carrier (3-1030) and the top surface (3-1011), the light-shielding sheet (3-1090) extends towards the side surface (3-1012) in a direction that is substantially parallel to the optical axis (3-O), and when viewed in a direction that is perpendicular to the optical axis (3-O), the light-shielding sheet (3-1090) is located on the lengthwise side (3-1017) of the opening (3-1015).

11. The optical member driving mechanism (3-1001) as claimed in claim 1, wherein the carrier (3-1030) has a protruding portion extending towards the side surface (3-1012) in a direction that is substantially parallel to the optical axis (3-O), and when viewed in a direction that is perpendicular to the optical axis (3-O), the protruding portion is located on the lengthwise side (3-1017) of the opening (3-1015).

12. The optical member driving mechanism (3-1001) as claimed in claim 1, wherein the fixed portion (3-F) further comprises a frame (3-1050) disposed between the carrier (3-1030) and the housing (3-1010), wherein the frame (3-1050) has a light-shielding structure (3-1051) protruding towards the base (3-1020).

13. The optical member driving mechanism (3-1001) as claimed in claim 12, wherein when viewed in a direction that is parallel to the optical axis (3-O), the light-shielding structure (3-1051) at least partially overlaps with the lengthwise side (3-1017) of the opening (3-1015), and a gap is formed between the light-shielding structure (3-1051) and a widthwise side (3-1018) of the opening (3-1015).

14. The optical member driving mechanism (3-1001) as claimed in claim 12, wherein the light-shielding structure (3-1051) has a jagged structure (3-1023) disposed to face the base (3-1020).

15. The optical member driving mechanism (3-1001) as claimed in claim 12, wherein a groove is formed between the light-shielding structure (3-1051) and the housing (3-1010), and the groove is disposed to face the top surface (3-1011).

16. The optical member driving mechanism (3-1001) as claimed in claim 15, further comprising a light-shielding member (3-1091) disposed in the groove, wherein a shortest distance between the light-shielding member (3-1091) and the base (3-1020) is shorter than a shortest distance between the barrier (3-1022) and the base (3-1020).

17. The optical member driving mechanism (3-1001) as claimed in claim 12, wherein the light-shielding structure (3-1051) further has a lower surface and a cutting surface that intersects with the lower surface, and a fillet between the lower surface and the cutting surface is not greater than 0.05 mm.

18. The optical member driving mechanism (3-1001) as claimed in claim 1, further comprising an electromagnetic driving assembly (3-1040, 3-1045) for driving the movable portion (3-M) to move relative to the fixed portion (3-F), wherein the electromagnetic driving assembly (3-1040, 3-1045) comprises a magnetic member (3-1041, 3-1046) and a coil (3-1042, 3-1047), the magnetic member (3-1041, 3-1046) or the coil (3-1042, 3-1047) is disposed on the movable portion (3-M), and the other of the magnetic member (3-1041, 3-1046) or the coil (3-1042, 3-1047) is disposed on the fixed portion (3-F).

## Patentansprüche

1. Antriebsmechanismus (3-1001) für ein optisches Bauteil, aufweisend:
ein bewegbares Teil (3-M), das einen Träger (3-1030) zum Aufnehmen eines optischen Bauteils mit einer optischen Achse (3-O) aufweist; und
ein fixiertes Teil (3-F), wobei das bewegbare Teil (3-M) relativ zu dem fixierten Teil (3-F) bewegbar ist und das fixierte Teil (3-F) ein Gehäuse (3-1010) und eine Basis (3-1020) aufweist, wobei das Gehäuse (3-1010) auf der Basis (3-1020) angeordnet ist, wobei das Gehäuse (3-1010) zum Schutz des bewegbaren Teils (3-M) dient, und das bewegbare Teil (3-M) innerhalb des Gehäuses (3-1010) angeordnet ist, wobei das Gehäuse (3-1010) aufweist:
eine obere Oberfläche (3-1011), die sich in einer Richtung erstreckt, welche parallel zu der optischen Achse (3-O) ist; und
eine Seitenoberfläche (3-1012), die sich von einer Kante der oberen Oberfläche (3-1011) in einer Richtung erstreckt, welche nicht parallel zu der optischen Achse (3-O) ist, wobei die Seitenoberfläche (3-1012) eine rechteckige Öffnung (3-1015) aufweist,
wobei die optische Achse (3-O) durch die Öffnung (3-1015) verläuft,
**dadurch gekennzeichnet, dass**
die Basis (3-1020) weiter eine Schwelle (3-1022) aufweist, die in Richtung der oberen Oberfläche (3-1011) vorsteht, wenn in einer Richtung betrachtet, welche parallel zu der optischen Achse (3-O) ist, wobei die Schwelle (3-1022) und die Längsseite (3-1017) der Öffnung (3-1015) mindestens teilweise überlappen,
wobei eine Lücke zwischen der Schwelle (3-1022) und der Breitseite (3-1018) der Öffnung (3-1015) ausgebildet ist,
wobei die Schwelle (3-1022) eine gezackte Struktur (3-1023) aufweist, die so angeordnet ist, dass sie der oberen Oberfläche (3-1011) gegenüberliegt.

2. Antriebsmechanismus (3-1001) für ein optisches Bauteil gemäß Anspruch 1, wobei die gezackte Struktur (3-1023) eine Mehrzahl von Spitzen (3-1024) aufweist, und wenn in einer Richtung betrachtet, welche senkrecht zu der optischen Achse (3-O) ist, die Spitzen (3-1024) von der Öffnung (3-1015) exponiert sind.

3. Antriebsmechanismus (3-1001) für ein optisches Bauteil gemäß Anspruch 1, wobei die gezackte Struktur (3-1023) eine Mehrzahl von Spitzen (3-1024) aufweist, und wenn in einer Richtung betrachtet, welche parallel zu der optischen Achse (3-O) ist, die Spitzen (3-1024) mit der Öffnung (3-1015) überlappen.

4. Antriebsmechanismus (3-1001) für ein optisches Bauteil gemäß Anspruch 1, wobei eine Nut (3-1027) zwischen der Schwelle (3-1022) und dem Gehäuse (3-1010) ausgebildet ist und die Nut (3-1027) so angeordnet ist, dass sie der oberen Oberfläche (3-1011) gegenüberliegt.

5. Antriebsmechanismus (3-1001) für ein optisches Bauteil gemäß Anspruch 4, weiter aufweisend ein Lichtabschirmungsbauteil (3-1091), das in der Nut (3-1027) angeordnet ist, wobei ein kürzester Abstand zwischen dem Lichtabschirmungsbauteil (3-1091) und der oberen Oberfläche (3-1011) kürzer ist als ein kürzester Abstand zwischen der Schwelle (3-1022) und der oberen Oberfläche (3-1011).

6. Antriebsmechanismus (3-1001) für ein optisches Bauteil gemäß Anspruch 1, wobei die Schwelle (3-1022) weiter eine obere Oberfläche (3-1025) und eine schneidende Oberfläche (3-1026), welche die obere Oberfläche (3-1025) kreuzt, aufweist und ein Übergang zwischen der oberen Oberfläche (3-1025) und der schneidenden Oberfläche (3-1026) nicht größer als 0,05 mm ist.

7. Antriebsmechanismus (3-1001) für ein optisches Bauteil gemäß Anspruch 1, wobei die Schwelle (3-1022) eine raue Oberfläche aufweist, die so angeordnet ist, dass sie der oberen Oberfläche (3-1011) gegenüberliegt.

8. Antriebsmechanismus (3-1001) für ein optisches Bauteil gemäß Anspruch 1, wobei die Basis (3-1020) eine raue Oberfläche aufweist, die so angeordnet ist, dass sie der oberen Oberfläche (3-1011) gegenüberliegt.

9. Antriebsmechanismus (3-1001) für ein optisches Bauteil gemäß Anspruch 1, weiter aufweisend ein Lichtabschirmungsbauteil (3-1091), das außerhalb des Gehäuses (3-1010) angeordnet ist, wobei, wenn in einer Richtung betrachtet, welche parallel zu der optischen Achse (3-O) ist, das Lichtabschirmungsbauteil (3-1091) mit einer Längsseite (3-1017) der Öffnung (3-1015) überlappt.

10. Antriebsmechanismus (3-1001) für ein optisches Bauteil gemäß Anspruch 1, wobei das bewegbare Teil (3-M) weiter eine Lichtabschirmungsplatte (3-1090) aufweist, die zwischen dem Träger (3-1030) und der oberen Oberfläche (3-1011) angeordnet ist, sich die Lichtabschirmungsplatte (3-1090) in Richtung der Seitenoberfläche (3-1012) in einer Richtung erstreckt, welche im Wesentlichen parallel zu der optischen Achse (3-O) ist, und wenn in einer Richtung betrachtet, welche senkrecht zu der optischen Achse (3-O) ist, sich die Lichtabschirmungsplatte (3-1090) auf der Längsseite (3-1017) der Öffnung (3-1015) befindet.

11. Antriebsmechanismus (3-1001) für ein optisches Bauteil gemäß Anspruch 1, wobei der Träger (3-1030) einen vorstehenden Teil aufweist, der sich in Richtung der Seitenoberfläche (3-1012) in einer Richtung erstreckt, welche im Wesentlichen parallel zu der optischen Achse (3-O) ist, und wenn in einer Richtung betrachtet, welche senkrecht zu der optischen Achse (3-O) ist, sich der vorstehende Teil auf der Längsseite (3-1017) der Öffnung (3-1015) befindet.

12. Antriebsmechanismus (3-1001) für ein optisches Bauteil gemäß Anspruch 1, wobei das fixierte Teil (3-F) weiter einen Rahmen (3-1050) aufweist, der zwischen dem Träger (3-1030) und dem Gehäuse (3-1010) angeordnet ist, wobei der Rahmen (3-1050) eine Lichtabschirmungsstruktur (3-1051) aufweist, die in Richtung der Basis (3-1020) vorsteht.

13. Antriebsmechanismus (3-1001) für ein optisches Bauteil gemäß Anspruch 12, wobei, wenn in einer Richtung betrachtet, welche parallel zu der optischen Achse (3-O) ist, die Lichtabschirmungsstruktur (3-1051) mindestens teilweise mit der Längsseite (3-1017) der Öffnung (3-1015) überlappt und eine Lücke zwischen der Lichtabschirmungsstruktur (3-1051) und einer Breitseite (3-1018) der Öffnung (3-1015) ausgebildet ist.

14. Antriebsmechanismus (3-1001) für ein optisches Bauteil gemäß Anspruch 12, wobei die Lichtabschirmungsstruktur (3-1051) eine gezackte Struktur (3-1023) aufweist, die so angeordnet ist, dass sie der Basis (3-1020) gegenüberliegt.

15. Antriebsmechanismus (3-1001) für ein optisches Bauteil gemäß Anspruch 12, wobei eine Nut zwischen der Lichtabschirmungsstruktur (3-1051) und dem Gehäuse (3-1010) ausgebildet ist und die Nut so angeordnet ist, dass sie der oberen Oberfläche (3-1011) gegenüberliegt.

16. Antriebsmechanismus (3-1001) für ein optisches Bauteil gemäß Anspruch 15, weiter aufweisend ein Lichtabschirmungsbauteil (3-1091), das in der Nut angeordnet ist, wobei ein kürzester Abstand zwischen dem Lichtabschirmungsbauteil (3-1091) und der Basis (3-1020) kürzer ist als ein kürzester Abstand zwischen der Schwelle (3-1022) und der Basis (3-1020).

17. Antriebsmechanismus (3-1001) für ein optisches Bauteil gemäß Anspruch 12, wobei die Lichtabschirmungsstruktur (3-1051) weiter eine untere Oberfläche und eine schneidende Oberfläche, welche sich mit der unteren Oberfläche kreuzt, aufweist, und ein Übergang zwischen der unteren Oberfläche und der schneidenden Oberfläche nicht größer ist als 0,05 mm.

18. Antriebsmechanismus (3-1001) für ein optisches Bauteil gemäß Anspruch 1, weiter aufweisend eine elektromagnetische Antriebseinheit (3-1040, 3-1045) zum Antreiben des bewegbaren Teils (3-M), sodass es sich relativ zu dem fixierten Teil (3-F) bewegt, wobei die elektromagnetische Antriebseinheit (3-1040, 3-1045) ein magnetisches Bauteil (3-1041, 3-1046) und eine Spule (3-1042, 3-1047) aufweist, wobei das magnetische Bauteil (3-1041, 3-1046) oder die Spule (3-1042, 3-1047) auf dem bewegbaren Teil (3-M) angeordnet ist, und das andere des magnetischen Bauteils (3-1041, 3-1046) oder der Spule (3-1042, 3-1047) auf dem fixierten Teil (3-F) angeordnet ist.

## Revendications

1. Mécanisme d'entraînement (3-1001) d'élément optique, comprenant :
une partie mobile (3-M) comprenant un support (3-1030) pour porter un élément optique avec un axe optique (3-O) ; et
une partie fixe (3-F), dans laquelle la partie mobile (3-M) est mobile par rapport à la partie fixe (3-F), et la partie fixe (3-F) comprend un logement (3-1010) et une base (3-1020), le logement (3-1010) est disposé sur la base (3-1020), dans lequel le logement (3-1010) est destiné à protéger la partie mobile (3-M), et la partie mobile (3-M) est disposée à l'intérieur du logement (3-1010), dans lequel le logement (3-1010) présente :
une surface supérieure (3-1011) s'étendant dans une direction qui est parallèle à l'axe optique (3-O) ; et
une surface latérale (3-1012) s'étendant dans une direction qui n'est pas parallèle à l'axe optique (3-O) à partir d'un bord de la surface supérieure (3-1011), dans lequel la surface latérale (3-1012) présente une ouverture (3-1015) rectangulaire,
dans lequel l'axe optique (3-O) passe à travers l'ouverture (3-1015), **caractérisé en ce que** la base (3-1020) comprend en outre une barrière (3-1022) faisant saillie vers la surface supérieure (3-1011), lorsqu'elle est vue dans une direction qui est parallèle à l'axe optique (3-O), la barrière (3-1022) et le côté en longueur (3-1017) de l'ouverture (3-1015) se chevauchent au moins partiellement,
dans lequel un interstice est formé entre la barrière (3-1022) et le côté en largeur (3-1018) de l'ouverture (3-1015),
dans lequel la barrière (3-1022) présente une structure dentelée (3-1023) disposée pour faire face à la surface supérieure (3-1011).

2. Mécanisme d'entraînement (3-1001) d'élément optique selon la revendication 1, dans lequel la structure dentelée (3-1023) présente une pluralité de crêtes (3-1024), et lorsqu'elles sont vues dans une direction qui est perpendiculaire à l'axe optique (3-O), les crêtes (3-1024) sont exposées depuis l'ouverture (3-1015).

3. Mécanisme d'entraînement (3-1001) d'élément optique selon la revendication 1, dans lequel la structure dentelée (3-1023) présente une pluralité de crêtes (3-1024), et lorsqu'elles sont vues dans une direction qui est parallèle à l'axe optique (3-O), les crêtes (3-1024) chevauchent l'ouverture (3-1015).

4. Mécanisme d'entraînement (3-1001) d'élément optique selon la revendication 1, dans lequel une rainure (3-1027) est formée entre la barrière (3-1022) et le logement (3-1010), et la rainure (3-1027) est disposée pour faire face à la surface supérieure (3-1011).

5. Mécanisme d'entraînement (3-1001) d'élément optique selon la revendication 4, comprenant en outre un élément pare-lumière (3-1091) disposé dans la rainure (3-1027), dans lequel une plus courte distance entre l'élément pare-lumière (3-1091) et la surface supérieure (3-1011) est plus courte qu'une distance la plus courte entre la barrière (3-1022) et la surface supérieure (3-1011).

6. Mécanisme d'entraînement (3-1001) d'élément optique selon la revendication 1, dans lequel la barrière (3-1022) présente en outre une surface supérieure (3-1025) et une surface coupante (3-1026) qui intersecte la surface supérieure (3-1025), et un congé entre la surface supérieure (3-1025) et la surface coupante (3-1026) n'est pas supérieur à 0,05 mm.

7. Mécanisme d'entraînement (3-1001) d'élément optique selon la revendication 1, dans lequel la barrière (3-1022) présente une surface rugueuse disposée pour faire face à la surface supérieure (3-1011).

8. Mécanisme d'entraînement (3-1001) d'élément optique selon la revendication 1, dans lequel la base (3-1020) présente une surface rugueuse disposée pour faire face à la surface supérieure (3-1011).

9. Mécanisme d'entraînement (3-1001) d'élément optique selon la revendication 1, comprenant en outre un élément pare-lumière (3-1091) disposé hors du logement (3-1010), dans lequel, lorsqu'il est vu dans une direction qui est parallèle à l'axe optique (3-O), l'élément pare-lumière (3-1091) chevauche un côté en longueur (3-1017) de l'ouverture (3-1015).

10. Mécanisme d'entraînement (3-1001) d'élément optique selon la revendication 1, dans lequel la partie mobile (3-M) comprend en outre une feuille pare-lumière (3-1090) disposée entre le support (3-1030) et la surface supérieure (3-1011), la feuille pare-lumière (3-1090) s'étend vers la surface latérale (3-1012) dans une direction qui est sensiblement parallèle à l'axe optique (3-O), et lorsqu'elle est vue dans une direction qui est perpendiculaire à l'axe optique (3-O), la feuille pare-lumière (3-1090) est située sur le côté en longueur (3-1017) de l'ouverture (3-1015).

11. Mécanisme d'entraînement (3-1001) d'élément optique selon la revendication 1, dans lequel le support (3-1030) présente une partie saillante s'étendant vers la surface latérale (3-1012) dans une direction qui est sensiblement parallèle à l'axe optique (3-O), et lorsqu'elle est vue dans une direction qui est perpendiculaire à l'axe optique (3-O), la partie saillante est située sur le côté en longueur (3-1017) de l'ouverture (3-1015).

12. Mécanisme d'entraînement (3-1001) d'élément optique selon la revendication 1, dans lequel la partie fixe (3-F) comprend en outre un cadre (3-1050) disposé entre le support (3-1030) et le logement (3-1010), dans lequel le cadre (3-1050) présente une structure pare-lumière (3-1051) faisant saillie vers la base (3-1020).

13. Mécanisme d'entraînement (3-1001) d'élément optique selon la revendication 12, dans lequel, lorsqu'il est vu dans une direction qui est parallèle à l'axe optique (3-O), la structure pare-lumière (3-1051) chevauche au moins partiellement le côté en longueur (3-1017) de l'ouverture (3-1015), et un interstice est formé entre la structure pare-lumière (3-1051) et un côté en largeur de l'ouverture (3-1015).

14. Mécanisme d'entraînement (3-1001) d'élément optique selon la revendication 12, dans lequel la structure pare-lumière (3-1051) présente une structure dentelée (3-1023) disposée pour faire face à la base (3-1020).

15. Mécanisme d'entraînement (3-1001) d'élément optique selon la revendication 12, dans lequel une rainure est formée entre la structure pare-lumière (3-1051) et le logement (3-1010), et la rainure est disposée pour faire face à la surface supérieure (3-1011).

16. Mécanisme d'entraînement (3-1001) d'élément optique selon la revendication 15, comprenant en outre un élément pare-lumière (3-1091) disposé dans la rainure, dans lequel une plus courte distance entre l'élément pare-lumière (3-1091) et la base (3-1020) est plus courte qu'une plus courte distance entre la barrière (3-1022) et la base (3-1020).

17. Mécanisme d'entraînement (3-1001) d'élément optique selon la revendication 12, dans lequel la structure pare-lumière (3-1051) présente en outre une surface inférieure et une surface coupante qui intersecte la surface inférieure, et un congé entre la surface inférieure et la surface coupante n'est pas supérieur à 0,05 mm.

18. Mécanisme d'entraînement (3-1001) d'élément optique selon la revendication 1, comprenant en outre un ensemble d'entraînement électromagnétique (3-1040, 3-1045) pour entraîner la partie mobile (3-M) pour se déplacer par rapport à la partie fixe (3-F), dans lequel l'ensemble d'entraînement électromagnétique (3-1040, 3-1045) comprend un élément magnétique (3-1041, 3-1046) et une bobine (3-1042, 3-1047), l'élément magnétique (3-1041, 3-1046) ou la bobine (3-1042, 3-1047) est disposé sur la partie mobile (3-M), et l'autre élément parmi l'élément magnétique (3-1041, 3-1046) ou la bobine (3-1042, 3-1047) est disposé sur la partie fixe (3-F).
